(19) Europäisches Patentamt
European Patent Office
Office européen des brevets

(11) Veröffentlichungsnummer: **0 012 930**
**B1**

(12) # EUROPÄISCHE PATENTSCHRIFT

(45) Veröffentlichungstag der Patentschrift: **06.10.82**

(51) Int. Cl.³: **C 07 C 143/70,** C 08 G 18/77

(21) Anmeldenummer: **79105099.0**

(22) Anmeldetag: **12.12.79**

(54) **Verfahren zur Herstellung von Isocyanatoarylsulfochloriden.**

(30) Priorität: **23.12.78 DE 2855938**

(43) Veröffentlichungstag der Anmeldung: **09.07.80 Patentblatt 80/14**

(45) Bekanntmachung des Hinweises auf die Patenterteilung: **06.10.82 Patentblatt 82/40**

(84) Benannte Vertragsstaaten: **BE CH DE FR GB IT NL**

(56) Entgegenhaltungen:
**DE-A-2 637 114**
**FR-A-2 017 875**
**GB-A-748 166**
**NL-A-6 900 725**
**US-D-414 266**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Dieterich, Dieter, Dr., Ludwig Girtler-Strasse 1, D-5090 Leverkusen (DE)**

**EP 0 012 930 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Isocyanatoarylsulfochloriden

Isocyanatoarylsulfochloride sind bekannt. Sie werden gemäß der Deutschen Patentschrift 947 159 durch Phosgenierung von aromatischen Aminosulfonsäuren hergestellt. Nachteilig an diesem Verfahren ist die Notwendigkeit, hochsiedende Lösungsmittel wie Dichlorbenzol und insbesondere Nitrobenzol einzusetzen und die Schwerlöslichkeit der als Ausgangsmaterial verwendeten Aminosulfonsäuren in diesen Lösungsmitteln, selbst bei den hohen angewandten Reaktionstemperaturen. Infolgedessen ist die Umsetzung langwierig und die Ausbeute der erhaltenen Isocyanatoarylsulfochloride läßt zu wünschen übrig. Dies gilt insbesondere für die Herstellung von Diisocyanatoarylsulfochloriden, von denen ein Vertreter im Beispiel 3 der o. g. Patentschrift in einer Ausbeute von 46% d. Th. erhalten wurde. Bedingt durch diese Nachteile hat das Verfahren keine technische Bedeutung erlangt.

Es ist weiterhin bekannt, einfache Arylsulfochloride durch Sulfonierung von Aromaten, z. B. mit Chlorsulfonsäure oder Gemischen aus Chlorsulfonsäure und Sulfurylchlorid herzustellen (vgl. z. B. Houben – Weyl, 4. Auflage, Band 9, Seite 563 – 585). Weiterhin ist es bekannt, Sulfochloride aus freien Sulfonsäuren oder deren Salzen mit Säurechloriden herzustellen. Diese aus der Literatur bekannten Verfahren sind bisher nicht oder nur mit negativem Ergebnis für die Herstellung von Isocyanatosulfochloriden aus Isocyanaten angewandt worden. Hierfür sind eine Reihe von Gründen verantwortlich:

Einmal erfordert die Sulforierung mit Chlorsulfonsäure einen Überschuß dieses Reagens und daher eine Aufarbeitung in Gegenwart von Wasser, wodurch die Isocyanat-Gruppen angegriffen werden, zum anderen sind Isocyanatosulfonsäuren erst in jüngster Zeit bekannt geworden und haben sich als schwierig handhabbare und extrem reaktionsfähige Verbindungen erwiesen. Darüber hinaus ist bekannt, daß Sulfonsäure-Gruppen mit Isocyanaten bei erhöhter Temperatur in unübersichtlicher Weise unter $CO_2$-Abspaltung reagieren, so daß unter den üblichen Bedingungen der Sulfochlorid-Herstellung in erheblichem Umfang mit anderen Reaktionen gerechnet werden mußte, z. B. auch mit Sulfon- und Anhydrid-Bildung sowie Polymerisationsreaktionen der Isocyanat-Gruppe.

Die US-B-414 266 beschreibt zwar die Sulfonierung von organischen Diisocyanaten insbesondere von Diisocyanato-toluol (Beispiel 2), wobei offensichtlich die entsprechenden Diisocyanato-Sulfonsäuren entstehen, vermittelt jedoch keinerlei Hinweis auf die Herstellung von Isocyanatoarylsulfochloriden.

Mindestens 2 Isocyanatgruppen aufweisende Isocyanatoarylsulfochloride, insbesondere die entsprechenden Derivate von 2,4-Diisocyanatotoluol, dem wichtigsten technischen Diisocyanat der Polyurethanchemie, würden jedoch äußerst interessante Substanzen mit einem beträchtlichen Anwendungspotential darstellen, vorausgesetzt, daß sie in einem technisch einfach zu handhabbaren, wirtschaftlichen Verfahren zugänglich sind, da sie

1. einen im Vergleich zum unmodifizierten Diisocyanat sehr niedrigen Dampfdruck aufweisen sollten,
2. eine im Vergleich zum unmodifizierten Diisocyanat erhöhte Polarität besitzen und
3. ihre Hydrolyseprodukte (aromatische Diaminosulfonsäuren) weitgehend untoxisch sind.

Es war daher die Aufgabe der vorliegenden Erfindung, ein technisch leicht durchführbares Verfahren zur Herstellung von Sulfochlorid-Substituenten aufweisenden 2,4-Diisocyanatotoluolen zur Verfügung zu stellen.

Überraschenderweise konnte diese Aufgabe trotz der genannten, zu erwartenden Schwierigkeiten, mit dem nachstehend beschriebenen erfindungsgemäßen Verfahren gelöst werden. Die bei diesem neuartigen Verfahren erhaltenen Verbindungen können als Homologe des in der DE-A 2 637 114 genannten 2,6-Diisocyanato-toluolsulfonsäurechlorids angesehen werden, sie sind jedoch bezüglich der Stellung der Isocyanatgruppen mit diesem nicht identisch. Die neuen erfindungsgemäßen Verbindungen erwiesen sich im übrigen als wertvolle Ausgangsmaterialien zur Herstellung von Polyisocyanat-Polyadditionsprodukten, die nicht nur die erwähnten Vorteile in sich vereinigen, sondern auch den mit ihnen hergestellten Polyadditionsprodukten eine verbesserte Flammwidrigkeit im Vergleich zu Polyadditionsprodukten auf Basis von Sulfochlorid-freien Diisocyanaten verleihen.

Gegenstand der Erfindung ist ein Verfahren zur Herstellung von Isocyanatoarylsulfochloriden der Formel

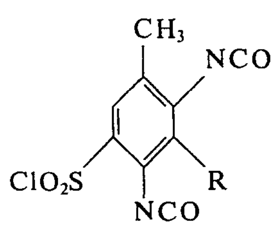

in welcher

R für Wasserstoff, eine Sulfochlorid-Gruppe $-SO_2Cl$ oder eine Sulfonsäure-Gruppe $-SO_3H$ steht,

dadurch gekennzeichnet, daß man 2,4-Diisocyanatotoluol in beliebiger Reihenfolge nacheinander oder gleichzeitig bei 0 – 160° C

a) mit 0,2 bis 2 Mol (je Mol Ausgangs-Diisocyanat) Schwefeltrioxid und/oder Chlorsulfonsäure und
b) mit 0,3 bis 20 Mol (je Mol Ausgangs-Diisocyanat) eines anorganischen Säurechlorids behandelt, und

Chlorwasserstoff aus dem Reaktionsgemisch entfernt.

Ausgangsmaterialien für das erfindungsgemäße Verfahren sind

(1.) 2,4-Diisocyanatotoluol bzw. dessen Gemische mit bis zu 35 Gew.-%, bezogen auf Gesamtgemisch, an 2,6-Diisocyanatotoluol.

(2.) Schwefeltrioxid und/oder Chlorsulfonsäure, wobei das Schwefeltrioxid in flüssiger, gelöster oder in gasförmiger, z. B. durch Stickstoff verdünnter Form oder in Form einer Additionsverbindung an organische Verbindungen eingesetzt werden kann. Derartige Additionsverbindungen sind beispielsweise die Addukte von Schwefeltrioxid an Dioxan, Tetrahydrofuran, Diäthyläther oder Dimethylformamid. Bevorzugt wird gasförmiges Schwefeltrioxid eingesetzt. Gegebenenfalls mitverwendete Lösungsmittel für das Schwefeltrioxid müssen unter den Reaktionsbedingungen des erfindungsgemäßen Verfahrens gegenüber Schwefeltrioxid und auch gegenüber Isocyanatgruppen inert sein. Geeignet sind beispielsweise halogenierte oder nitrierte Kohlenwasserstoffe wie z. B. Dichloräthan, Tetrachloräthan, Methylenchlorid, Chloroform, Fluortrichlormethan, Nitromethan, Nitrobenzol, Diäthyläther, Dioxan, Tetrahydrofuran, Schwefeldioxid, Chlorbenzol, Dichlorbenzol, oder bevorzugt überschüssige Mengen der nachstehend unter drittens genannten Säurechloride.

(3.) Anorganische, zur Überführung von organischen Sulfonsäuregruppen in Sulfochloridgruppen geeignete Säurechloride wie z. B. Thionylchlorid, Sulfurylchlorid, Phosphorpentachlorid, Dischwefeldichlorid oder Phosgen. Bei der Durchführung des erfindungsgemäßen Verfahrens im Laboratiumsmaßstab wird Thionylchlorid, im technischen Maßstab Phosgen bevorzugt.

Die unter (3.) genannten Säurechloride stellen, falls sie im Überschuß zur Anwendung gelangen, gleichzeitig die bevorzugten Lösungsmittel bei der Durchführung des erfindungsgemäßen Verfahrens dar. Bei Verwendung von Phosgen wird vorzugsweise zusätzlich eines der o. g. inerten Lösungsmittel mitverwendet

Das erfindungsgemäße Verfahren wird bevorzugt in Gegenwart von acylierten Aminen durchgeführt, z. B. Dimethylformamid, Diäthylformamid, Dimethylacetamid, Formylpiperidin, Acetylpiperidin, N-Methylpyrrolidon. Bevorzugter Katalysator ist Dimethylformamid.

Das Sulfonierungsmittel wird in einer Menge von 0,2 Mol bis 2 Mol auf 1 Mol Diisocyanat eingesetzt. Besonders bevorzugt ist ein Molverhältnis von Diisocyanat zu Schwefeltrioxid oder Chlorsulfonsäure von 1 : 0,4 bis 1 : 1,5. Bei der Herstellung definierter Diisocyanatomonosulfonsäurechloride wird in der Regel ein Molverhältnis von 1 : 1 bis 1 : 1,2 eingehalten. Wird der Eintritt von 2 Sulfochlorid-Gruppen in 1 Molekül Diisocyanat angestrebt, so kommt ein Molverhälnis zwischen 1 : 1,8 bis 1 : 2 zur Anwendung. Grundsätzlich muß darauf geachtet werden, daß das verwendete Sulfonierungsmittel bei der Reaktion mit dem Diisocyanat quantitativ verbraucht bzw. ein evtl. verwendeter Überschuß entfernt wird, so daß nach beendeter Sulfonierungsreaktion kein Überschuß Sulfonierungsmittel mehr vorhanden ist. Andererseits ist es durchaus möglich, eine nur teilweise Sulfochlorierung des Diisocyanats zu bewirken, indem weniger als die äquivalente Menge des genannten Sulfonierungsmittels eingesetzt wird. So kann beispielsweise ein Molverhältnis von 1 : 0,2 bis 1 : 0,9 angewendet werden.

Das anorganische Säurechlorid wird im Überschuß gegenüber dem Sulfonierungsmittel eingesetzt. Im allgemeinen wird die 1,5- bis 10fach molare Menge gegenüber der berechneten angewandt. Dementsprechend beträgt das Molverhältnis von Diisocyanat zu anorganischem Säurechlorid 1 : 0,3 bis 1 : 20. Beträgt das Molverhältnis von Diisocyanat zu Schwefeltrioxid etwa 1 : 1, so wird für das Molverhältnis Diisocyanat zu Säurechlorid ein Verhältnis zwischen 1 : 1,5 und 1 : 8 eingehalten.

Die Menge des als Katalysator verwendeten Dimethylformamids liegt gewöhnlich bei etwa 2 bis 40 g pro Mol Sulfonierungsmittel. Bevorzugt ist eine Menge zwischen 3 und 30 g. Da bekanntlich Isocyanate mit Dimethylformamid zu reagieren vermögen, wobei unerwünschte Nebenprodukte entstehen, wird man stets versuchen, unter den jeweils gegebenen Reaktionsbedingungen mit möglichst wenig Dimethylformamid auszukommen.

Das erfindungsgemäße Verfahren wird im Temperaturbereich zwischen 0 und 160° C, vorzugsweise 5 und 100° C, durchgeführt.

Das erfindungsgemäße Verfahren eignet sich zur Herstellung von 2,4-Diisocyanato-toluol-5-sulfochlorid, sowie zur Herstellung von 2,4-Diisocyanato-toluol-3,5-disulfochlorid oder von Gemischen,

welche neben dem genannten Disulfochlorid 2,4-Diisocyanato-toluol-5-sulfochlorid und 2,4-Diisocyanato-toluol-5-sulfochlorid-3-sulfosäure enthalten.

Besonders gut geeignet ist das erfindungsgemäße Verfahren zur Herstellung der Monosulfochloride von Diisocyanatotoluol, wenn man nacheinander oder gleichzeitig 2,4-Diisocyanatotoluol bzw. dessen Gemisch mit bis zu 35 Gew.-%, bezogen auf Gesamtgemisch, an 2,6-Diisocyanatotoluol nacheinander oder gleichzeitig mit Schwefeltrioxid oder Chlorsulfonsäure im Molverhältnis 1 : 1 bis 1 : 1,2 und mit Thionylchlorid oder Phosgen im Molverhältnis 1 : 1,5 bis 1 : 8 behandelt und den dabei sich bildenden Chlorwasserstoff aus dem Reaktionsgemisch entfernt.

Für die Durchführung des erfindungsgemäßen Verfahrens kommen mehrere Möglichkeiten in Betracht:

1. Dem Diisocyanat wird zunächst das Sulfonierungsmittel und anschließend das Säurechlorid zugesetzt. Bei dieser Verfahrensvariante entstehen als Zwischenstufe die Uretdione der entsprechenden Isocyanatoarylsulfonsäuren die feste unlösliche Verbindungen sind. Um die Rührbarkeit zu gewährleisten, muß entweder in Gegenwart eines der genannten inerten Lösungsmittel oder aber in Gegenwart eines Diisocyanatüberschusses sulfoniert werden. Liegt das Molverhältnis von Diisocyanat zu Sulfonierungsmittel zwischen 1 : 0,7 und 1 : 2, so ist die Mitverwendung eines Lösungsmittels unumgänglich. Die Sulfonierung wird im allgemeinen bei einer Temperatur zwischen 0 und 80° C, vorzugsweise zwischen 5 und 40° C, durchgeführt. Im Anschluß an die Sulfonierung kann das Lösungsmittel ganz oder auch teilweise entfernt werden, z. B. durch Absaugen, Abschleudern oder auch Destillation. Feste Isocyanatoarylsulfonsäuren gehen nach Zugabe des Säurechlorids in Gegenwart eines der oben aufgeführten Katalysatoren meist rasch in Lösung. Bei Verwendung von Phosgen als Säurechlorid wird vorzugsweise das Lösungsmittel im Reaktionsansatz belassen.
   Bei der Herstellung von Di-sulfochloriden und damit einem Molverhältnis von Diisocyanat zu Sulfonierungsmittel von etwa 1 : 2 kann auch das Diisocyanat zu einem Gemisch aus Lösungsmittel und Sulfonierungsmittel zugesetzt werden.
2. Eine andere Variante des erfindungsgemäßen Verfahrens besteht darin, das Diisocyanat zunächst mit dem anorganischen Säurechlorid zu vermischen und dann das Sulfonierungsmittel zuzugeben. In diesem Fall dient das Säurechlorid gleichzeitig als Lösungsmittel, so daß auf gesonderte Zugabe eines Lösungsmittels verzichtet werden kann. Ein weiterer Vorteil dieser Verfahrensvariante besteht darin, daß die intermediär gebildete Diisocyanatosulfonsäure sofort nach der Entstehung mit dem Säurechlorid weiterreagiert und daß während der Reaktion nur wenig oder gar kein Niederschlag entsteht.
3. Es ist auch möglich, das Sulfonierungsmittel und das anorganische Säurechlorid gleichzeitig auf das Diisocyanat einwirken zu lassen, z. B. kann eine Lösung von Chlorsulfonsäure in Thionylchlorid eingesetzt werden. Besonders bevorzugt ist es, ein Diisocyanat mit Phosgen zu behandeln und während der Phosgenierung zu sulfonieren.

Wie bereits dargelegt, kommt beim erfindungsgemäßen Verfahren das Sulfonierungsmittel in solchen Mengen zum Einsatz, daß das Molverhältnis Diisocyanat : Sulfonierungsmittel zwischen 1 : 0,2 und 1 : 2 liegt.

Vor Zugabe des Säurechlorids bei zweistufiger Durchführung des erfindungsgemäßen Verfahren bzw. bei gleichzeitiger Sulfonierung und Einwirkung des Säurechlorids muß darauf geachtet werden, daß das Molverhältnis Diisocyanat zu Sulfonierungsmittel nie oberhalb 1 : 2 liegt.

Die Reaktion mit dem Säurechlorid, d. h. bei zweistufiger Reaktionsführung die Einwirkung des Säurechlorids auf die vorgebildete Sulfonsäure bzw. bei einstufiger Reaktionsführung die Einwirkung des Säurechlorids und des Sulfonierungsmittels auf das Diisocyanat wird im allgemeinen bei Temperaturen zwischen 10 und 160° C, bevorzugt zwischen 10 und 100° C durchgeführt. In einer besonders bevorzugten Ausführungsform werden Sulfonierungsmittel und Säurechlorid bei etwa 20 bis 30° C zugegeben und die Temperatur dann allmählich auf etwa 80° C gesteigert. Die Reaktion wird solange fortgesetzt, bis aus dem Reaktionsgemisch kein Chlorwasserstoff mehr entweicht. Die Entfernung des Chlorwasserstoffs kann durch Einleiten von Kohlendioxid oder Stickstoff beschleunigt werden.

Nach erfolgter Reaktion werden evtl. verwendete Lösungsmittel sowie überschüssiges Säurechlorid durch Destillation entfernt. Der flüssige Rückstand enthält das Isocyanatoarylsulfochlorid und ist für die meisten Verwendungszwecke bereits ausreichend rein. Sofern definierte Sulfochloride vorliegen, insbesondere 2,4-Diisocyanatotoluol-5-sulfochlorid oder 2,4-Diisocyanato-toluol-3,5-disulfochlorid, tritt beim Abkühlen des Rückstandes Kristallisation ein. Eine weitere Reinigung ist durch Umkristallisation oder auch durch Destillation möglich. Um bei der Destillation Zersetzungsreaktionen auszuschließen ist es zweckmäßig, das Rohprodukt vor der Destillation in einem wenig polaren Lösungsmittel, z. B. Toluol zu lösen, die toluolische Lösung von unlöslichen Bestandteilen abzutrennen und nach Abdestillieren des Toluols den Rückstand im Hochvakuum zu destillieren. Es ist ein besonderer Vorteil des erfindungsgemäßen Verfahrens, daß in den meisten Fällen auf einen gesonderten Destillationsschritt verzichtet werden kann.

Der in Toluol unlösliche Rückstand besteht zu einem erheblichen Anteil aus dimerem Diisocyanatoarylsulfonsäurechlorid. Auch durch 2malige Destillation hochgereinigtes TDI-Sulfochlorid (TDI = Toluylendiisocyanat = Diisocyanato-toluol) enthält nach längerer Lagerung zunehmend dimere Anteile. Für die Verwendung der Diisocyanatoarylsulfochloride zur Herstellung von Polyadditionsprodukten oder zur Herstellung von Sulfonsäureestern spielt dies keine Rolle, da die dimeren Uretdione im Prinzip wie monomere Sulfochloride reagieren.

Nach dem Verfahren der vorliegenden Erfindung wurden die folgenden Diisocyanatoaryl-sulfochloride erstmalig hergestellt:

2,4-Diisocyanato-toluol-5-sulfochlorid,
2,4-Diisocyanato-toluol-3,5-disulfochlorid.

Die Durchführbarkeit des erfindungsgemäßen Verfahrens bei relativ niedrigen Temperaturen in guter Ausbeute ist überraschend, da die Sulfonierung von Isocyanaten im allgemeinen zu recht thermostabilen Dimeren führt und unter Annahme dieser Dimeren als Zwischenstufe sowohl der Uretdionring als auch intermediär gebildetes Carbamidsäurechlorid wieder gespalten werden muß. Außer Chlorwasserstoff werden nur wenig Nebenprodukte gebildet. Ein besonderer Vorteil des erfindungsgemäßen Verfahrens besteht darin, daß ausgehend von großtechnisch hergestellten Diisocyanatotoluolen auf einfache Weise die entsprechenden Diisocyanatosulfochloride zugänglich sind. Diese, nach dem erfindungsgemäßen Verfahren leicht zugänglichen technischen »TDI-Sulfochloride« stellen wertvolle Ausgangsmaterialien zur Herstellung von Polyisocyanat-Polyadditionsprodukten dar. Die erfindungsgemäßen Isocyanatoarylsulfonsäurechloride sind darüber hinaus wertvolle Ausgangsmaterialien zur Herstellung anderer modifizierter Polyisocyanate, z. B. Herstellung der entsprechenden Isocyanatoarylsulfonsäureester.

## Beispiel 1

In eine Lösung von 18 g 2,4-Diisocyanatotoluol in 60 ml 1,2-Dichloräthan werden bei 10° C 8,5 g mit Stickstoff verdünntes gasförmiges Schwefeltrioxid eingeleitet. Anschließend wird die Hauptmenge Dichloräthan abdestilliert und der zurückbleibende Brei mit 75 g Thionylchlorid und 1 g Dimethylformamid verrührt. Innerhalb von ca. 1 Stunde wird auf 80° C geheizt, wobei Chlorwasserstoff entweicht. Die Mischung wird solange am Sieden gehalten, bis die Chlorwasserstoffentwicklung beendet ist. Anschließend werden Thionylchlorid und Dichloräthan im Vakuum abdestilliert. Der Rückstand (29 g) wird mit 250 ml Toluol bei 70° C verrührt und die Lösung vom unlöslichen Rückstand (7 g) abfiltriert. Nach Abdestillieren des Toluols erhält man 21 g kristallisiertes 2,4-Diisocyanatotoluol-5-sulfochlorid (Schmp. 73 bis 80° C). Durch Destillation bei 158 bis 160° C/0,1333 mbar läßt sich ein sehr reines Produkt erhalten (Schmp. 79 bis 82° C).

## Beispiel 2

Analog Beispiel 1 werden, ausgehend von 87 g techn. Diisocyanatotoluol (80% 2,4-, 20% 2,6-Isomeres), 42 g Schwefeltrioxid, 375 g Thionylchlorid und 5 g Dimethylformamid, 119 g kristallisiertes TDI-Sulfochlorid erhalten. Die Destillation bei 165 bis 170° C/0,4 mbar ergibt 99 g reines Produkt. Die Analyse eines 2mal destillierten Produkts (Kp. 160 bis 162° C) ergab folgende Werte:

| | berechnet für $C_9H_5N_2O_4SCl$ | gefunden |
|---|---|---|
| C | 39,6 | 39,6 |
| H | 1,8 | 1,8 |
| N | 10,3 | 10,2 |
| O | 23,5 | 23,0 |
| Cl | 13,0 | 13,0 |
| S | 11,7 | 11,5 |
| | 99,9 | 99,1 |

IR- und KR-Spektrum bestätigen die Struktur. Hauptkomponente ist 2,4-Diisocyanato-toluol-5-sulfochlorid (ca. 80%). Nebenkomponente ist 2,6-Diisocyanato-toluol-5-sulfochlorid (ca. 20%).

Beispiel 3

87 g (0,5 Mol) Diisocyanatotoluol (80% 2,4-, 20% 2,6-Isomeres) werden mit 240 ml Thionylchlorid versetzt und in die Lösung bei 20 bis 30° C 44 g Schwefeltrioxid, mit Stickstoff verdünnt, eingeleitet. Es erfolgt eine geringfügige Ausfällung. Nach Zugabe von 5 g Dimethylformamid wird langsam zum Sieden erhitzt und solange unter Durchleiten von Stickstoff auf 81°C gehalten, bis kein Chlorwasserstoff mehr entweicht. Nach Abdestillieren des Thionylchlorids wird gemäß Beispiel 1 bis Toluol gereinigt. Man erhält 26 g in Toluol unlöslichen Rückstand und 108 g TDI-Sulfochlorid.

Beispiel 4

1740 g (10 Mol) Diisocyanatoluol (80% 2,4-, 20% 2,6-Isomeres) werden in 4,5 l 1,2-Dichloräthan durch Einleiten von mit Stickstoff verdünntem gasförmigem Schwefeltrioxid sulfoniert (Verbrauch: 843 g $SO_3$). Anschließend wird die Hauptmenge 1,2-Dichloräthan abdestilliert, bis der Rückstand nicht mehr gerührt werden kann. Nun werden 4,8 l Thionylchlorid und 100 g Dimethylformamid zugesetzt und das Gemisch sehr langsam auf 81° C erwärmt, wobei Chlorwasserstoff entweicht. Bei 65° C wird die Lösung klar. Es wird unter Durchleiten von Stickstoff solange gekocht, bis die Chlorwasserstoffentwicklung beendet ist (81° C). Aufarbeitung gemäß Beispiel 1. Man erhält 516 g in Toluol unlöslichen Rückstand (wahrscheinlich überwiegend Dimeres von TDI-Sulfochlorid) und 2260 g rohes kristallisiertes Sulfochlorid.

Beispiel 5

87 g (0,5 Mol) Diisocyanatotoluol (80% 2,4-, 20% 2,6-Isomeres) werden mit 240 ml Thionylchlorid versetzt und in 30 Minuten 58,5 g Chlorsulfonsäure zugetropft. Dabei steigt die Temperatur auf 35° C an und es erfolgt Chlorwasserstoffentwicklung. Anschließend werden 5 g Dimethylformamid zugesetzt und analog Beispiel 1 aufgearbeitet. Man erhält 48 g Toluol unlöslichen Rückstand und 90 g kristallisiertes rohes TDI-Sulfochlorid.

Beispiel 6

Analog Beispiel 5 wird auf 87 g 2,4-Diisocyanatotoluol das Sulfochlorid hergestellt. Ausbeute 91,5 g.

Beispiel 7

87 g (0,5 Mol) Diisocyanatotoluol (80% 2,4-, 20% 2,6-Isomeres) werden in 500 ml 1,2-Dichloräthan durch Einleiten mit verdünntem gasförmigen Schwefeltrioxid sulfoniert (45 g $SO_3$). Anschließend werden 7 g Dimethylformamid zugesetzt und bei 2° C 150 g Phosgen eingeleitet. Anschließend wird unter Rühren erwärmt, wobei von 40° C ab Gasabspaltung erfolgt. Bei 80° C ist das Reaktionsgemisch fast klar, bei dieser Temperatur werden weiter 120 g Phosgen eingeleitet.

Anschließend wird unter Durchleiten von Stickstoff solange gekocht, bis die Chlorwasserstoffentwicklung beendet ist. Aufarbeitung gemäß Beispiel 1. Man erhält 111 g rohes kristallisiertes Sulfochlorid.

Beispiel 8

174 g (1,0 Mol) 2,4-Diisocyanatotoluol werden in 800 ml 1,2-Dichloräthan durch Einleiten von 160 g (2,0 Mol) mit Stickstoff verdünntem gasförmigen Schwefeltrioxid disulfoniert. Im Anschluß daran wird der größte Teil des Dichloräthans abdestilliert. Der Rückstand wird mit 1904 g (16 Mol) Thionylchlorid durch Erwärmen auf 60° aufgeschlämmt und homogenisiert. Zur abgekühlten Suspension werden langsam 25 g Dimethylformamid zugesetzt und die Mischung langsam aufgeheizt, wobei ab 65° starke Chlorwasserstoff-Entwicklung einsetzt. Es wird so lange am Sieden gehalten, bis die Chlorwasserstoff-Entwicklung nachläßt und anschließend Stickstoff durchgeblasen. Sodann wird die Suspension bei Raumtemperatur filtriert (84 g unlöslicher Rückstand; im IR-Spektrum sind NCO- und Uretdion'Gruppen zu erkennen). Vom Filtrat wird das Thionylchlorid im Vakuum abdestilliert. Es werden 273 g eines zwischen 60° und 70° C schmelzenden Rückstandes erhalten, der als

Hauptkomponenten das Disulfochlorid sowie das Sulfonsäure-Sulfochlorid des Diisocyanatotoluol enthält.

**Patentanspruch**

Verfahren zur Herstellung von Isocyanatoarylsulfochloriden der Formel

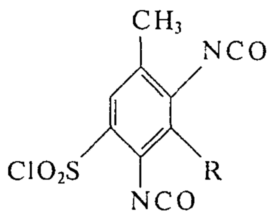

in welcher

R für Wasserstoff, eine Sulfochlorid-Gruppe $-SO_2Cl$ oder eine Sulfonsäure-Gruppe $-SO_3H$ steht,

dadurch gekennzeichnet, daß man 2,4-Diisocyanatotoluol in beliebiger Reihenfolge nacheinander oder gleichzeitig bei 0 – 160° C

a) mit 0,2 bis 2 Mol (je Mol Ausgangs-Diisocyanat) Schwefeltrioxid und/oder Chlorsulfonsäure und
b) mit 0,3 bis 20 Mol (je Mol Ausgangs-Diisocyanat) eines anorganischen Säurechlorids behandelt, und

Chlorwasserstoff aus dem Reaktionsgemisch entfernt.

**Claim**

Process for the preparation of isocyanatoaryl sulphochlorides of the formula

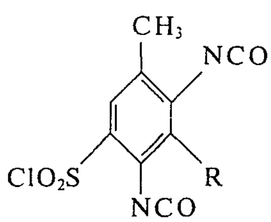

in which

R represents hydrogen, a sulphochloride group $SO_2Cl$ or a sulphonic acid group $SO_3H$,

characterised in that 2,4-diisocyanatotoluene is treated with the following at 0 – 160° C, successively in any sequence or simultaneously:

a) 0.2 to 2 mol (per mol of starting diisocyanate) of sulphur trioxide and/or chlorosulphonic acid and
b) 0.3 to 20 mol (per mol of starting diisocyanate) of an inorganic acid chloride, and

hydrogen chloride ist removed from the reaction mixture.

**Revendication**

Procédé de production de sulfochlorures d'isocyanato-aryle de formule:

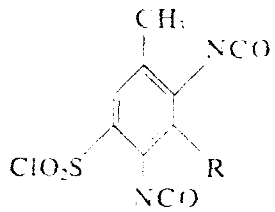

dans laquelle:

R est l'hydrogène, un groupe sulfochlorure $-SO_2Cl$ ou un groupe acide sulfonique $-SO_3H$.

caractérisé en ce qu'on traite du 2,4-diisocyanatotoluène successivement dans un ordre quelconque ou simultanément, à 0 – 160° C,

a) avec 0,2 à 2 moles (par mole de diisocyanate de départ) d'anhydride sulfurique et/ou d'acide chlorosulfonique et
b) avec 0,3 à 20 moles (par mole de diisocyanate de départ) d'un chlorure d'acide inorganique, et

on élimine du chlorure d'hydrogène du mélange réactionnel.